(19) Europäisches Patentamt
European Patent Office
Office européen des brevets

(11) Veröffentlichungsnummer: **0 142 599**
**B1**

(12) **EUROPÄISCHE PATENTSCHRIFT**

(45) Veröffentlichungstag der Patentschrift: **04.02.87**

(21) Anmeldenummer: **84104851.5**

(22) Anmeldetag: **30.04.84**

(51) Int. Cl.⁴: **C 05 C 9/00**, C 05 G 3/08 // C12N9/99

(54) **Harnstoffhaltige Dünger mit Ureaseinhibitoren.**

(30) Priorität: **24.06.83 DE 3322724**

(43) Veröffentlichungstag der Anmeldung: **29.05.85 Patentblatt 85/22**

(45) Bekanntmachung des Hinweises auf die Patenterteilung: **04.02.87 Patentblatt 87/6**

(84) Benannte Vertragsstaaten: **AT BE CH DE FR GB IT LI LU NL SE**

(56) Entgegenhaltungen:
**DE-A-2 054 887**
**US-A-3 009 804**

**DIE PHARMAZIE, Band 35, Nr. 2, Februar 1980, Seiten 63-68, Berlin, DE; H.-J. MICHEL: "Ureaseinhibitoren"**

(73) Patentinhaber: **RUHR- STICKSTOFF AKTIENGESELLSCHAFT, Wittener Strasse 45, D-4630 Bochum 1 (DE)**

(72) Erfinder: **Norden, Jürgen, Samborner Strasse 97, D-4630 Bochum (DE)**
Erfinder: **Aigner, Heinrich, Dr., Am Silberknapp 15, D-4408 Dülmen (DE)**
Erfinder: **Schindler, Fritz, Dr., Am Stadtgarten 1/1959, D-4650 Gelsenkirchen (DE)**
Erfinder: **Samblebe, Reinhard, Dr., An der Ziegelei 48, D-4690 Herne 2 (DE)**

**EP 0 142 599 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf feste und/oder flüssige harnstoffhaltige Dünger, denen Ureaseinhibitoren zugesetzt werden.

## Harnstoff als Düngemittel

Harnstoff und harnstoffhaltige Handelsdünger werden in fester Form als Bodendünger und in flüssiger Form als Boden- sowie als Blattdünger angewendet. Das Enzym Urease katalysiert die Hydrolyse von Harnstoff gemäß folgender Reaktionsgleichung:

$$H_2N - \overset{O}{\overset{\|}{C}} - NH_2 + H_2O \xrightarrow{Urease} 2\ NH_3 + CO_2$$

Häufig läuft die Reaktion so schnell ab, daß
- bei Bodendüngung, insbesondere auf sorptionsschwachen und trockenen Böden, ein Teil des freigesetzten Ammoniaks vom Boden nicht mehr gebunden werden kann und in die Atmosphäre entweicht. Dadurch gehen beträchtliche Mengen von an sich durch Pflanzen verwertbarem Stickstoff verloren.
- bei Blattdüngung Ammoniak kurzzeitig in einer derartig hohen Konzentration anfällt, daß es zu Schäden an den Blättern führen kann und z. T. auch in die Atmosphäre freigesetzt wird.

Im allgemeinen liegt der Schwellenwert, von dem an derartige Schäden bei Getreide auftreten, bei
20 kg/ha N in der Form von Harnstofflösung bzw.
40 kg/ha N als Ammonnitrat-Harnstoff-Lösung (AHL)

Zur Vermeidung von derartigen Schäden an Blättern ist man daher häufig gezwungen, bei Blattdüngung mit harnstoffhaltigen Düngemitteln unter der für die Pflanze zur optimalen Ertragsbildung erforderlichen Dosierung von 60 - 80 kg/ha N zu bleiben.

Mit dem Ziel einer Reduzierung solcher Blattschäden hat man versuchsweise die harnstoffhaltige Flüssigkeit grobtropfig ausgebracht. Dabei läuft ein großer Teil der Spritzflüssigkeit von den Blättern ab, so daß aus diesem Grunde in der Tat weniger Schäden zu beobachten sind. Gleichzeitig geht jedoch der eigentliche Vorteil der Blattdüngung, nämlich die direkte und deshalb schnelle Stickstoffaufnahme durch das Blatt, die bei feintropfiger Applikation möglich ist, verloren.

Extrem feintropfige Applikation wird mit Rotationsdüsen erreicht. Anstelle von 200 - 400 l/ha Spritzflüssigkeit werden 20 - 40 l/ha eingesetzt. Dabei wird eine ganz intensive Benetzung erreicht, die allerdings bei trockenem und warmem Wetter besonders verdunstungsgefährdet ist (s. Seite 33, Abschnitt 1 und 2).

Zur Vermeidung der Nachteile beim Einsatz harnstoffhaltiger Düngemittel in fester Form als Bodendüngung wurde mehrfach die Anwendung von Substanzen, die die Aktivität des Enzyms Urease hemmen und dadurch die Hydrolyse verzögern, erprobt, vgl. z. B.
DL 122 621 - DL 122 178 - DL 121 457;
ferner L.G. BUNDY, J.M. BREMNER
Soil, Biol.Biochem. 6 (1974) 27 - 30
und 369 - 76
und J.M. BREMNER, L.A. DOUGLAS
Soil Sci.Soc.Am.Proc. 37 (1973) 225 - 226.

Durchschlagende Erfolge für die praktische Anwendung sind jedoch bisher nicht bekannt geworden.

Bei der Lagerung harnstoffhaltiger Lösungen kommt immer wieder Harnstoffzersetzung vor und beeinträchtigt die Lagerstabilität.

Aufgabe der vorliegenden Erfindung ist es, für die harnstoffhaltigen Düngemittel, und zwar sowohl in fester als auch in gelöster Form, Zusätze zu finden, welche Gemische liefern, die
1. $NH_3$-Verluste auf Acker und Grünland vermeiden,
2. selbst pflanzenverträglich sind, d. h. keine Schäden hervorrufen,
3. Ertragssteigerung bei den Nutzpflanzen bewirken,
4. bereits bei geringfügigen Zusatzen optimale Inhibierung der Urease erreichen,

5. toxikologisch für Mensch und Tier unbedenklich sind,
6. optimal auf dem Acker und den Pflanzen verteilbar sind,
7. die Pflanzenverträglichkeit der harnstoffhaltigen Lösungen verbessern,
8. die Lagerstabilität harnstoffhaltiger Lösungen verbessern.

**Das Enzym Urease und seine Inhibierung**

Urease kommt u. a. auch in Pflanzen, insbesondere in den Samen bestimmter Bohnenarten vor und kann aus diesen in kristalliner Form gewonnen werden. Bevorzugtes Ausgangsprodukt sind beispielsweise Sojabohnen.

Auch gewisse Bodenbakterien bilden Urease. Außerdem existiert im Boden Urease, die aus abgestorbenen Bakterien freigesetzt wurde und die, an bestimmten Bodenbestandteilen adsorbiert, - nach Art eines trägergebundenen Enzyms - noch längere Zeit ihre Aktivität entfaltet.

Der Vergleich der Ureaseaktivitäten von proben unbehandelten mit z. B. durch Toluolzusatz sterilisierten Bodens zeigt, daß durch die Sterilisierung nur eine unbedeutende Aktivitätsabnahme erreicht wurde. Durch diese Maßnahme wurden zwar die Urease liefernden Bakterien abgetötet, nicht aber die vorher von den Bakterien gebildete Urease vernichtet.

Enzyme sind größere Eiweißkörper (Molgewicht der Urease aus Bohnensamen ca. 489 000) mit einer für jedes Enzym spezifischen Raumstruktur und einer besonders ausgezeichneten Stelle, dem aktiven Zentrum. Das aktive Zentrum ist so geformt, daß sich das Substrat-Molekül an dieser Stelle an das Enzym anlagern und eine Bindung mit ihm eingehen kann. Ist dies geschehen, dann ist der sogenannte Enzym-Substrat-Komplex (ES-Komplex) gebildet, aus dem heraus die enzymatische Reaktion abläuft. Nach jeder Bildungsreaktion verlassen die Reaktionsprodukte das aktive Zentrum, und das nächste Substrat-Molekül kann sich anlagern.

Da keine enzymatische Reaktion ohne vorangegangene Bildung des ES-Komplexes abläuft, muß zur Enzyminhibierung die Ausbildung dieses Komplexes verhindert werden. Bei der Urease sind - genauso wie bei einer Reihe weiterer Enzyme-Schwefelwasserstoff (SH)-Gruppen, die von der Thioaminosäure Cystein stammen, an der Ausbildung des ES-Komplexes beteiligt. Zur Verhinderung der Entstehung von Bindungen zwischen SH-Gruppen der Urease und Harnstoff ergeben sich daher folgende Möglichkeiten:

1. Inaktivierung der Urease, d. h. andersartige Besetzung der reaktiven Gruppen, insbesondere der SH-Gruppen durch Substanzen, mit denen diese Gruppen andersartige Reaktionen bevorzugt eingehen,

```
z. B. Oxydation zu Disulfiden)
      Merkaptid-Bildung       )     der aktiven
                              )
      Alkylierung             )     SH-Gruppen.
      Additionsreaktionen     )
```

2. Blockierung der aktiven Zentren der Urease durch sterisch ähnliche Substanzen, z. B. Thioharnstoff
3. Veränderung des Harnstoffs in der Weise, daß sein Molekül nicht mehr in die aktiven Zentren "hineinpaßt", z. B. Reaktionen mit Aldehyden usw. Dieser Weg hat zu einer besonderen Klasse von Depotdüngern geführt, den Harnstoff-Aldehyd-Kondensationsprodukten. Auf diese soll hier nicht näher eingegangen werden.

Dagegen ergibt sich die Aufgabe, nach Substanzen zu suchen, die eine Ureasehemmung auf dem ersten und/oder zweiten Weg herbeizuführen in der Lage sind.

Zur Prüfung derartiger Substanzen ist ein möglichst einfaches Testverfahren erforderlich.

**Prüfungsverfahren zum Nachweis der Inhibitorwirkung**

Zum Nachweis der Hemmung der ureolytischen Harnstoffspaltung durch Substanzen mit Inhibitorwirkung werden verschließbare Planflanschbecher mit 200 g ureasehaltigem Boden (Wassergehalt = 50 % der maximalen Wasserkapazität) beschickt. Nach Einbringen von gewöhnlich 0,5 g Harnstoffprills (vgl. jedoch Tabelle 5) mit einem Inhibitorgehalt von gewöhnlich 1 Gew.% (vgl. jedoch Tabelle 3, Spalte 3) werden die Planflanschbecher verschlossen und Luft wird mit einer Geschwindigkeit von ca. 5 l/h hindurchgeschickt. Das durch die Luft ausgetriebene Ammoniak wird durch eine Schwefelsäurevorlage geleitet und die Vorlageflüssigkeit zurücktitriert. Nach Ablauf von vorgegebenen Zeiträumen (s. Tabelle 3 und 5) lassen sich die $NH_3$-Freisetzungen in den einzelnen Ansätzen mit den verschiedenen Urease-Hemmstoffen bestimmen.

**Systematische Untersuchung von Urease-Hemmstoffen**

Die mit dem Verfahren im vorigen Abschnitt auf Urease-Hemmwirkung untersuchten Stoffe sind in den Tabellen 1 und 2 zusammengestellt.

Tabelle 1 enthält Substanzen, von denen aus der Literatur bekannt war, daß sie als Ureaseinhibitoren wirksam sind. Zu einigen Stoffen, z. B. den Malein-Imiden, wurden weitere Derivate synthetisiert und mituntersucht. Dabei wurde festgestellt, daß nur die im Anschluß an die Tabelle 1 genannten Stoffe als gute Inhibitoren zu bezeichnen sind.

Möglicherweise haben bei den anderen Substanzen die unterschiedlichen Bodeneigenschaften eine Beeinträchtigung der Inhibitoraktivität hervorgerufen.

In Tabelle 2 sind weitere Substanzen zusammengestellt, bei denen eine Urease-Hemmwirkung möglich schien. Eine herausragende Inhibitorwirkung wurde jedoch bei keiner der Substanzen beobachtet, das gilt insbesondere bei denen mit fungizider oder bakterizider Wirkung, z. B. die Nummer 4 bis 28, 31 bis 33 und 35 bis 41 der Tabelle 1 und die Nummern 23, 27 und 28 von-Tabelle 2.

Ein Zusammenhang zwischen Urease-Hemmung und pestiziden Eigenschaften liegt also nicht vor.

**Tabelle 1**

Untersuchung von Substanzen auf ihre Wirkung als Urease-Inhibitoren:
Verbindungen, deren Inhibitorwirkung bereits aus der Literatur bekannt sind.

1. $Mn^{++}$
2. $Mg^{++}$
3. $Ba^{++}$
4. $Hg^{++}$
5. $Cu^{++}$
6. $Zn^{++}$
7. $Cd^{++}$
8. $Ni^{++}$
9. $Co^{++}$
10. $Ag^{+}$
11. Quecksilber-p-chlorbenzoat
12. Phenylquecksilberacetat
13. Kupfer-dimethyldithiocarbamat
14. Eisen-(II)-dimethyldithiocarbamat
15. Zink-dimethyldithiocarbamat
16. Kupfersulfat
17. Molybdänsulfat
18. Zinksulfat
19. Borax
20. Thioharnstoff
21. 1.3.4-Thiadiazol-2.5-dithiol
22. 5-Amino-1.3.4-thiadiazol-2-thiol
23. 1.3.4-Thiadiazolin-2-thion
24. 1.3.5-Thiadiazin-2-thion
25. Thiuramdisulfid
26. 2.2'-Di(5-amino-1.3.4-thiadiazol)disulfid
27. 2-Mercapto-1-methylimidazol
28. Pyridin-3-sulfonsäure
29. Desthiobiotin
30. Phosphorsäurephenylesterdiamid
31. 1.4-Benzochinon
32. 2.6-Dimethyl-1.4-benzochinon
33. 2.5-Dimethyl-1.4-benzochinon
34. 2.6-Dichlorbenzochinon-4-chlorimid
35. Tetrachlor-1,2-benzochinon
36. Hydrochinon
37. Catechol
38. Phenol
39. Pyrogallol
40. Resorcin
41. 1-Naphthol
42. Acetohydroxamsäure
43. N-Ethylmaleinimid

44. Oxythiaminchlorid
45. Hydroxyharnstoff
46. N'-methyl-N-hydroxyharnstoff
47. N-Acetylmaleinimid
48. N-Acetoximethylmaleinimid
49. N-Aminomaleinimid
50. N-Benzoyloximethylmaleinimid
51. Bis-[N-methylmaleinimid]-ether
52. Carbamoylimid
53. Dichlormaleinimid
54. Dimethylmaleinsäureanhydrid
55. Essigsäureester des N-Methylolmaleinimid
56. N-Ethylmaleinimid
57. N-Ethylmaleinamidsäure
58. N-n-Heptylmaleinimid
59. Hexamethylen-bis-maleinimid
60. Isopropylamidomaleinimid
61. Maleinimid
62. N-Methylmaleinamidsäure
63. N-(2-Methyl-1-naphthyl)maleinimid
64. N-Methylmaleinimid
65. N-Methyloldichlormaleinimid
66. N-Methylolmaleinimid
67. N-(2-Pyridyl)2,3-dimethylmaleinimid
68. Phenylurethan des N-Methylolmaleinimid

Von diesen Verbindungen zeigten die Chinone 31 bis 35 N-Acetoxymethylmaleinimid (48), N-Ethylmaleinimid (56), Maleinimid (61), N-Methylmaleinimid (64) und N-Methylolmaleinimid (66) die beste Hemmwirkung.

**Tabelle 2**

Untersuchung von Substanzen auf ihre Wirkung als Urease-Inhibitoren:
Weitere getestete Verbindungen:

| | |
|---|---|
| 1 | 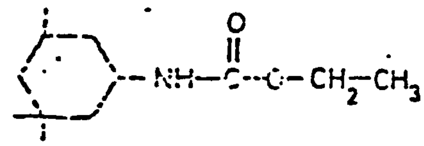 |
| 2 | 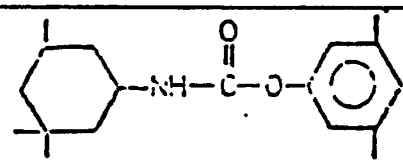 |
| 3 | 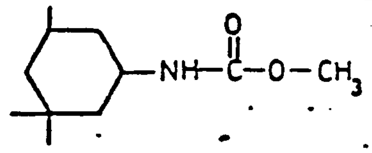 |
| 4 | 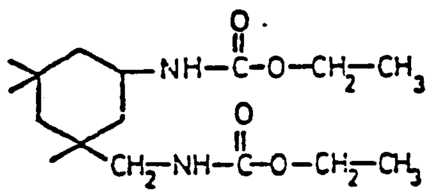 |
| 5 | 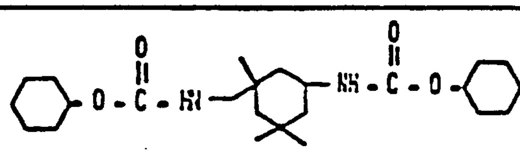 |
| 6 | 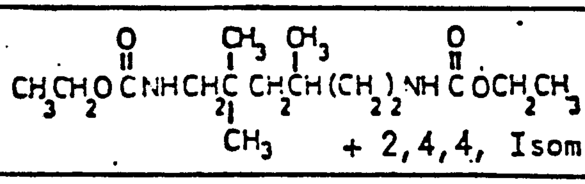 + 2,4,4, Isom. |
| 7 | 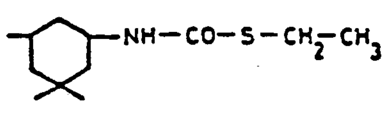 |
| 8 | 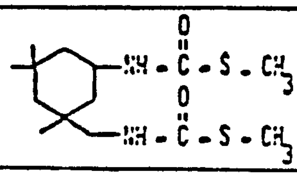 |

**Tabelle 2** - Fortsetzung

| | |
|---|---|
| 9 | 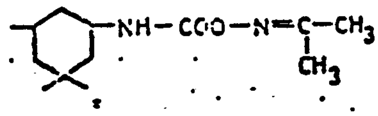 |
| 10 | 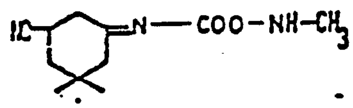 |
| 11 | 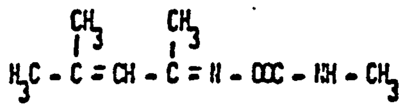 |
| 12 | 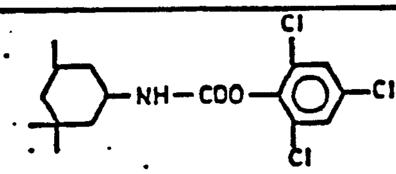 |
| 13 | 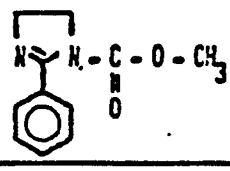 |
| 14 | 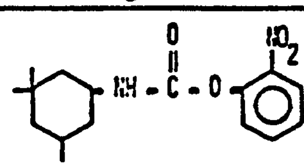 |
| 15 | 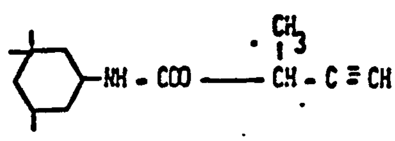 |
| 16 | 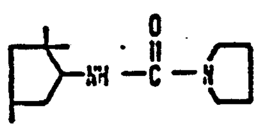 |
| 17 | 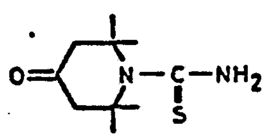 |
| 18 | 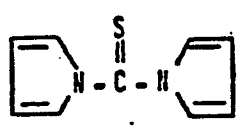 |

**Tabelle 2** - Fortsetzung

| | |
|---|---|
| 19 | 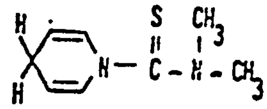 |
| 20 | 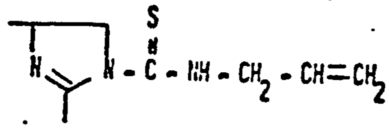 |
| 21 | 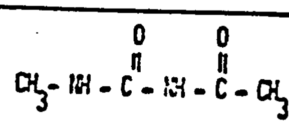 |
| 22 | 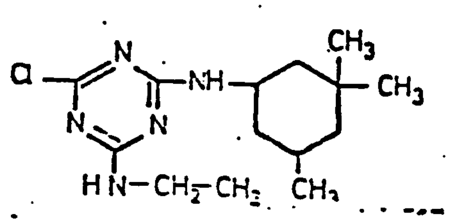 |
| 23 | 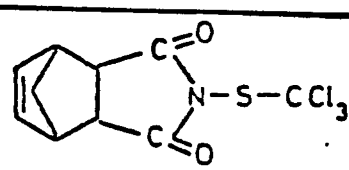 |
| 24 | 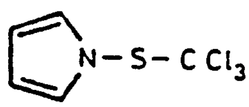 |
| 25 | 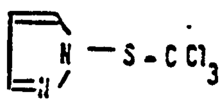 |
| 26 | 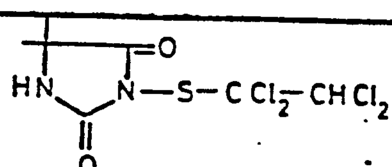 |
| 27 | 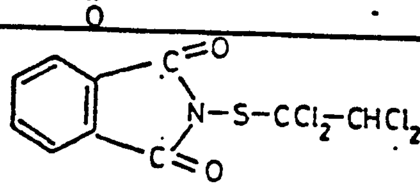 |
| 28 | 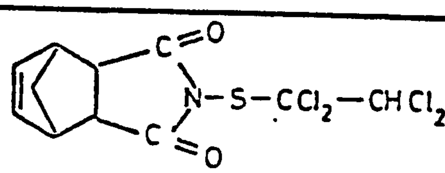 |

| | |
|---|---|
| 29 | 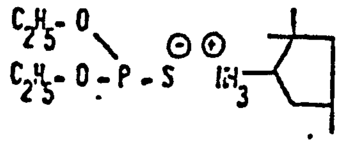 |
| 30 | 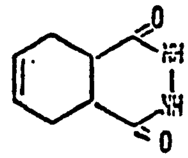 |
| 31 | 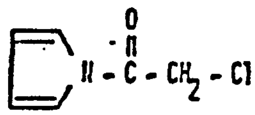 |
| 32 | 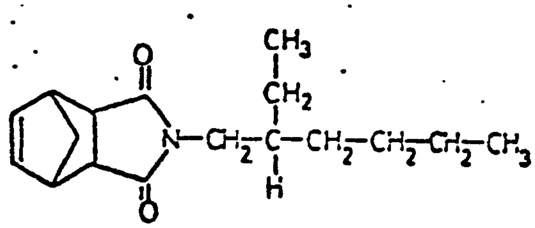 |
| 33 | 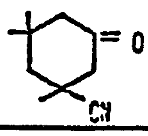 |
| 34 | 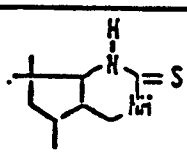 |
| 35 | 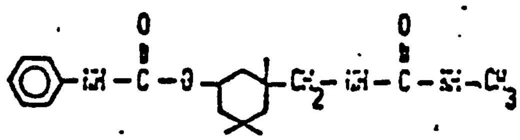 |

Thioazoline

| | |
|---|---|
| 36 | 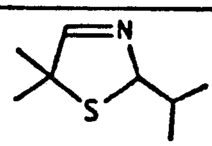 |
| 37 | 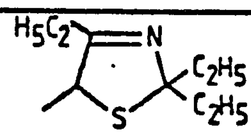 |

**Tabelle 2** - Fortsetzung

| | |
|---|---|
| 38 | 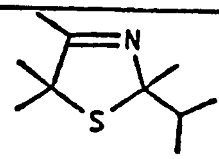 |
| 39 | 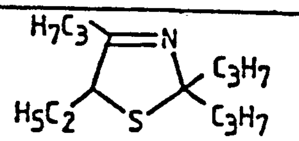 |
| 40 | 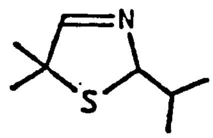 |
| 41 | 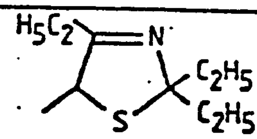 |
| 42 | 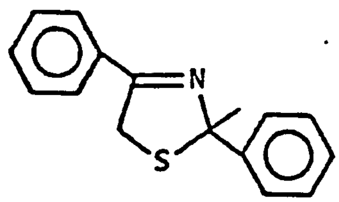 |
| 43 | 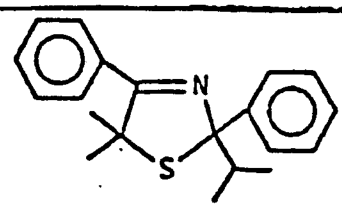 |
| 44 | 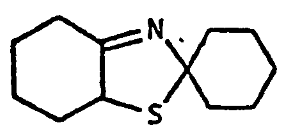 |
| 45 | 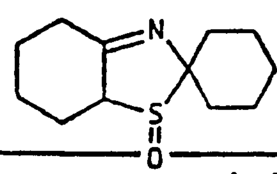 |
| 46 | 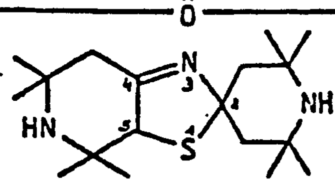 |

**Tabelle 2** - Fortsetzung

Imidazolinthione

| | |
|---|---|
| 47 | 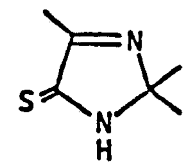 |
| 48 | 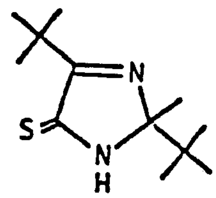 |
| 49 | 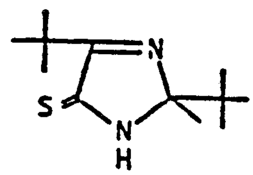 |
| 50 | 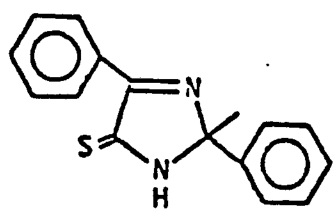 |
| 51 | 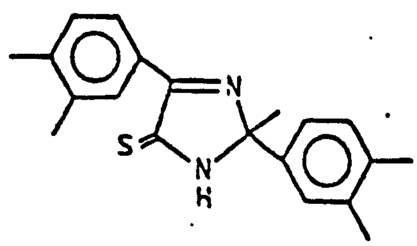 |

**Tabelle 2** - Fortsetzung

Hexathiocane

| | |
|---|---|
| 52 | 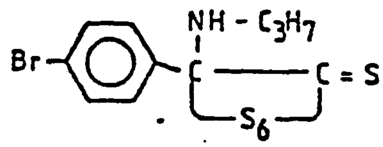 |
| 53 | 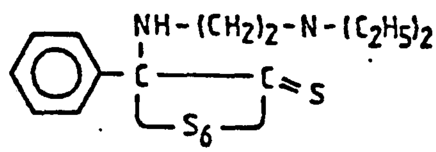 |
| 54 | 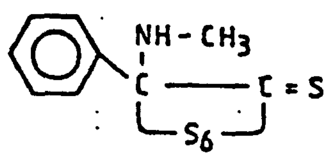 |

Es wurde keine oder nur eine geringe Urease-Hemmwirkung beobachtet.

Bei der weiteren Suche nach Urease-Hemmstoffen wurden die Brom-Nitro-Derivate als Inhibitoren ermittelt, die überraschenderweise außerordentlich gut wirksam waren. Die damit in Tabelle 3 zusammengestellten Versuchsergebnisse belegen, daß bei Einsatz von 1 % Inhibitor (bezogen auf die Harnstoffmenge) die Substanzen 1 - 10 befriedigende Ergebnisse ($NH_3$-Freisetzung kleiner als 1 % nach 7 Tagen) liefern. Bei Einsatz von nur 1/4 % Inhibitor sind das bei 4 Tagen Laufzeit nur noch 3 ger Brom-Nitro-Verbindungen.

In Tabelle 4 sind weitere untersuchte Brom-Nitro-Verbindungen zusammengestellt, deren Wirkung jedoch nicht an die der ersten 4 Substanzen der Tabelle 3 heranreichte.

**Tabelle 3**: Inhibitorwirkung von Brom-Nitro-Verbindungen

N-Verluste des Bodens durch $NH_3$-Verflüchtigungen in % der eingesetzten Harnstoff-N-Menge

| | | | |
|---|---|---|---|
| Laufzeit in Tagen | | 4 | 7 |
| Dosierung des Inhibitors in % der eingesetzten Harnstoff-N-Menge | | 0,25 | 1 |
| Lfd. Nr. | Inhibitor | $NH_3$-Verflüchtigung % | % |
| a | Kontrolle (Harnstoff ohne Inhibitor) | 52,8 | 71,2 |
| 1 | 2-Brom-2-nitro-propyl-N-methylcarbamat | 0,3 | 0,0 |
| 2 | 2-Brom-2-nitro-butyl-N-methylcarbamat | 0,5 | 0,0 |
| 3 | 2-Brom-2-nitro-propan-1,3-diol | 0,9 | 0,0 |
| 4 | 2-Brom-2-nitro-propanol | 2,1 | 0,0 |
| 5 | 1-Brom-1-nitro-3,3.dimethyl-butan-2-ol | 4,7 | 0,0 |
| 6 | 1-Brom-1-nitro-pentanol-2 | 6,5 | 0,0 |
| 7 | 1-Brom-1-nitro-butanol-2 | 8,3 | 0,0 |
| 8 | 1-Brom-1-nitro-3-methyl-butan-2-ol | 10,0 | 0,1 |
| 9 | 2-Brom-2-nitro-propyl-bis-N-methyl-carbamat | 10,4 | 0,1 |
| 10 | 2-Brom-2-nitro-butanol-3 | 18,4 | 0,3 |
| 11 | 1-Brom-1-nitro-propanol-2 | - | 2,3 |
| 12 | 1-Brom-1-nitro-2-phenyl-ethanol-2 | 27,5 | 3,0 |
| 13 | 1-Brom-3,3,3-trichlor-1-nitro-propan-2-ol | 33,5 | 4,6 |
| 14 | 1,4-Dibrom-1,4-dinitro-butandiol-2,3 | 37,7 | 4,3 |
| 15 | 1,3,3,3-Tetrabrom-1-nitropropan-2-ol | 41,4 | 15,2 |

**Tabelle 4**

Weitere, auf Inhibitor-Wirkung getestete Brom-Nitro-Verbindungen

1 2-Brom-2-nitropropyl-N-trimethylcyclohexyl-carbamat
2 3-Brom-3-nitrobutyl-N-trimethylcyclohexyl-carbamat
3 Isopropyl-bis-N-2-brom-2-nitro-propylcarbamat
4 Isopropyl-bis-N-3-brom-3-nitro-butylcarbamat
5 2,2,4-Trimethyl-hexamethylen-bis-N-2-brom-2-nitro-propylcarbamat
6 2,2,4-Trimethyl-hexamethylen-bis-N-3-brom-3-nitro-butylcarbamat
7 3-Brom-3-nitro-butyl-N-phenylcarbamat
8 2-Brom-2-nitropropyl-N-phenylcarbamat
9 2-Brom-2-nitropropyl-N-m-toluylcarbamat

10 2-Brom-2-nitrobutyl-N-m-toluylcarbamat
11 2-Brom-2-nitropropyl-N-2,6-dimethylphenyl-carbamat
12 2-Brom-2-nitropropyl-N-3-chlorphenylcarbamat
13 2-Brom-2-nitrobutyl-N-3-chlorphenylcarbamat
14 2-Brom-2-nitropropyl-N-3,4-dichlorphenyl-carbamat
15 2-Brom-2-nitrobutyl-3,4-dichlorphenylcarbamat
16 2-Brom-2-nitrobutyl-N-3,5-dichlorphenylcarbamat
17 2-Brom-2-nitropropyl-N-3-trifluormethylphenyl-carbamat
18 2-Brom-2-nitrobutyl-N-3-trifluormethylphenyl-carbamat
19 Bis-2-Brom-2-nitropropyl-N-durocarbamat
20 2-Brom-2-nitropropyl-N-isopropylcarbamat
21 2-Brom-2-nitropropyl-N-t-butylcarbamat
22 2-Brom-2-nitropropyl-N-trans-trimethylcyclo-hexylcarbamat
23 2-Brom-2-nitropropyl-N-cyclodecylcarbamat
24 2-Brom-2-nitrobutyl-N-isopropylcarbamat
25 2-Brom-2-nitrobutyl-N-t-butylcarbamat
26 2-Brom-2-nitrobutyl-N-cyclododecylcarbamat

Von diesen Verbindungen erreicht jedoch keine die Wirkung von 2-Brom-2-nitro-propyl-N-methylcarbamat (Substanz 1 in Tab. 3).

Etwa eine Woche nach den Untersuchungen gemäß Tabelle 3 wurden die Untersuchungen für die Substanzen 2 - 4 der Tabelle 3 mit einer anderen Bodenart wiederholt. Dabei ist (vgl. Tabelle 5) festzustellen:

1. Die Ureasewirkung ist abhängig von der Bodenart.
2. Bei Einsatz der doppelten Menge Harnstoff steigt die $NH_3$-Freisetzung nicht nur auf das Doppelte an, sondern weitaus stärker, z.B. für die Kontrollprobe beim 5-Tage-Versuch von 14,2 % nicht auf 28,4 %, sondern sogar auf 39,7 %.

**Tabelle 5**

Inhibitorwirkung bei verschiedenen Harnstoff-Mengen pro Fläche
N-Verluste des Bodens durch $NH_3$-Verflüchtigung berechnet als % der eingesetzten Harnstoff-N-Menge

| Lfd. Nr. | Inhibitor (1 % der Harnstoffmenge) | Harnstoff g/100 $cm^2$ | Tage/Laufzeit 3 | 5 | 7 |
|---|---|---|---|---|---|
| | | | % | % | % |
| a | Kontrolle (Harnstoff ohne Inhibitor | 0,3 | 1,7 | 14,2 | 16,8 |
| 1 | 2-Brom-2-nitro-propyl-N-methylcarbamat | 0,3 | 0,0 | 0,0 | 1,2 |
| 3 | 2-Brom-2-nitro-propan-1,3-diol | 0,3 | 0,0 | 0,0 | 0,0 |
| 4 | 2-Brom-2-nitro-propanol | 0,3 | 0,0 | 0,0 | 3,6 |
| a | Kontrolle (Harnstoff ohne Inhibitor) | 0,6 | 11,9 | 39,7 | 44,7 |
| 1 | 2-Brom-2-nitro-propyl-N-methylcarbamat | 0,6 | 0,0 | 0,0 | 0,1 |
| 3 | 2-Brom-2-nitro-propan-1,3-diol | 0,6 | 0,0 | 0,0 | 0,5 |
| 4 | 2-Brom-2-nitro-propanol | 0,6 | 0,0 | 0,0 | 10,9 |

Nach den Versuchsergebnissen der Tabelle 3 und 5 gelang es in keinem Fall, 100 % des aus Harnstoff entwickelbaren $NH_3$ auszutreiben. Das kann darauf zurückgeführt werden, daß die Sorptionskräfte des beigefügten Bodens das Rest-$NH_3$ festhalten. Denkbar wäre auch, daß ein Teil des nicht ausgetriebenen $NH_3$ - insbesondere bei den mit Brom-Nitro-Verbindungen behandelten Proben - sofort in $NO_3$ überführt worden ist.

Ein Versuch mit Ammoniumsulfat und 2-Brom-2-nitro-propanol zeigte jedoch, daß die erfindungsgemäßen Urease-Inhibitoren keinen fördernden Einfluß auf die Nitrifikation ausüben.

Weder unter den bekannten Urease-Inhibitoren (Tabelle 1), noch unter den Verbindungen der Tabelle 2 wurde eine Substanz oder Substanzgruppe gefunden, die den auf den Seiten 2/3 gestellten Aufgaben entsprach, sondern - überraschenderweise - unter den Brom-Nitro-Verbindungen.

Ähnliche Brom-Nitro-Verbindungen sind von der Firma Henkel als antimikrobielle Mittel (vgl. DE 16 42 058, 17 67 586, insbesondere für Waschzwecke, DE 16 68 995, 17 67 684, 19 43 112) verwendet worden. Als Mittel zur Frischhaltung von Schnittblumen wurden Brom-Nitro-Verbindungen in der DE-AS 21 13 209 und 21 13 210 empfohlen. BOOTS Pure Drug setzten diese Verbindungen zur Bekämpfung phytopathogener Bakterien ein (GB 1 193 954).

Von BASF wurden Brom-Nitro-Verbindungen als Fungizide eingesetzt: DE-OS 20 54 887. Gemäß dieser Patentanmeldung werden derartige Verbindungen auch im Gemisch mit Düngemittel verwendet. Es findet sich jedoch in dieser Veröffentlichning weder ein spezifischer Hinweis auf Harnstoffdünger, noch wird die ureasehemmende Wirkung dieser Brom-Nitro-Verbindungen offenbart. Vgl. auch "Chemie der Pflanzenschutz- und Schädlingsbekämpfungsmittel", Berlin, Heidelberg, New York, Herausgeber: R. Wegler

Bd 3 1976 S. 279
Bd 4 1977 S. 150
und Bd 6 1981 S. 373.

Wie die Tabellen 1 und 2 gezeigt haben, kann man jedoch aus fungiziden oder antibakteriellen Eigenschaften nicht schlußfolgern, daß die betreffenden Substanzen Urease-Inhibitoren sein müßten. Diese Wirksamkeit bei den Brom-Nitro-Verbindungen tritt völlig überraschend auf, während sie bei den bekannten Pflanzenbehandlungsmitteln und insbesondere bei den Fungiziden nicht zu beobachten war, jedenfalls nicht bei denen, die wenig pflanzenschädlich sind, im Gegensatz zu den Verbindungen 1 - 16, bei denen z. T. eine erhebliche pflanzenschädigende Wirkung vorliegen kann.

Mithin bleibt festzustellen, daß es gelang, in den Brom-Nitro-Verbindungen Zusätze zu finden, die harnstoffhaltigen Düngemitteln zu ihrer optimalen Wirksamkeit verhelfen. Diese als Zusatz geeigneten Brom-Nitro-Verbindungen haben die Formel

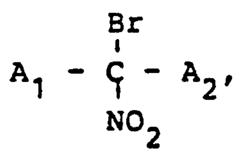

wobei $A_1 = (CH_2)_{n_1}\ X_2$ und $A_2 = (CH_2)_{n_2}\ X_2$ bedeuten,

wobei sowohl $n_1$ und $n_2$ als auch $X_1$ und $X_2$ gleich oder verschieden und die Alkylgruppen von $A_1$ und $A_2$ gerad- oder verzweigtkettig und die Substituten $X_1$ und $X_2$ an jedem beliebigen C angeordnet sein können, bevorzugt allerdings in $\alpha$ - oder $\omega$ -Stellung zum Brom-Nitro-Kohlenstoffatom, und wobei

$n_1$ und $n_2$ die Werte 0 bis 6 annehmen können und
$X_1$ und $X_2$ jeweils H oder YR bedeuten mit
Y = O, S oder NH und
R = H ein gerad- oder verzweigtkettiges $C_1$-bis $C_6$-Alkyl oder eine bis zu 3 Methylgruppen enthaltende Cyclopent(en)yl-,Cyclohex(en)yl- oder Phenyl-Gruppe

oder 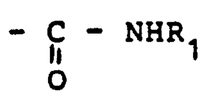 und

$R_1$ = einer der für R angeführten Substituenten (ausschließlich des zuletzt genannten) sein kann.

Besonders vorteilhaft haben sich insbesondere die Verbindungen der Nr. 1 - 4 gemäß Tabelle 3 erwiesen:

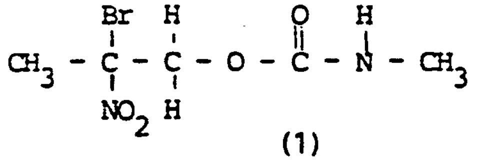

(1)

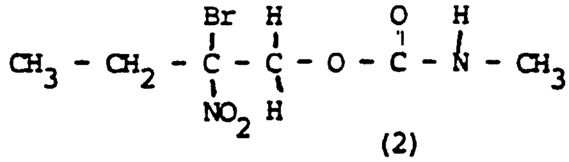

(2)

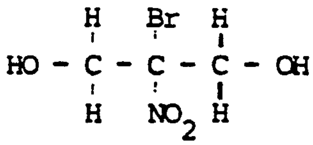

und

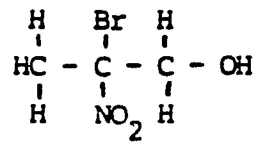

(3) (4)

Aus der Gruppe der Brom-Nitro-Verbindungen wird die Substanz 3, Tab. 3, auch für andere Indikationen, z. B. im pharmazeutischen und kosmetischen Bereich, eingesetzt. Sie wird in Farm Chemical Handbook 1981 im Pesticide Dictionary als Bronopol bezeichnet,ihre $LD_{50}$ bei oraler Verabreichung an Ratten mit 400 mg/kg angegeben. Es liegt in der Konzentration bis 15 % vom Harnstoff-N nicht mehr im toxisch gefährlichen Bereich. Für den vorgesehenen Einsatzzweck und bei der vorgesehenen Verteilungsweise sind Schäden für Mensch und Tier nicht zu befürchten.

**Verwendung verschiedener harnstoffhaltiger Dünger als Bodendünger**

Die Ergebnisse der Versuche in Mitscherlich-Gefäßen sind in den Tabellen 6 und 7 zusammengestellt.
In Tabelle 6 sind verschiedene Urease-Hemmstoffe als Zusatz zu Harnstoff als Bodendünger miteinander verglichen. Sowohl in der Gesamt-Erntemenge als auch in der N-Aufnahme und im Rohproteingehalt werden mit Brom-Nitro-Verbindungen die besten Ergebnisse erzielt. Die Maleinderivate und das Chinon-Produkt liefern schlechtere Ergebnisse.
Bei den Versuchen in der Tabelle 7 zu Weidelgras wurden als Bodendüngung Harnstoff ohne und mit Ureasehemmer in Aufwandmengen zwischen 0,5 und 1,0 g N/Gefäß im Vergleich mit Kalk-Ammon-Salpeter (KAS) geprüft. Als Produkt aus der Maleinimidgruppe wurde die Substanz 64 der Tabelle 1, also N-Methylmaleinimid, aus den Brom-Nitro-Verbindungen die Substanz 1 der Tabelle 2 Brom-2-nitro-propyl-N-methylcarbamat zugesetzt. Auch bei dieser Versuchsreihe zeigte sich die Kombination Harnstoff + 2 % Brom-Nitro-Verbindung der entsprechenden Mischung mit 2 % einer Maleinimid-Verbindung und natürlich auch der Reihe mit Harnstoff allein überlegen. Der Ertrag an Trockensubstanz steigt bei Erhöhung der Düngergabe von 0,75 auf 1,0 g.N sowohl bei Harnstoffdüngung allein als auch bei Zusatz einer Maleinimid-Verbindung kaum noch. Die N-Aufnahme bzw. die Rohproteinmenge wird in beiden Fällen noch deutlich gesteigert, und zwar bei Zusatz des Ureasehemmers stärker als ohne einen derartigen Zusatz.

**Tabelle 6**

Gefäßversuche mit Welschem Weidelgras (5 Schnitte zwischen dem 06.06. und 05.11.) mit Harnstoff als Bodendünger in Mengen von vier mal 1,0 g N/Gefäß als auch Kopfdüngung nach jedem Schnitt mit Zusatz von verschiedenen Urease-Hemmstoffen (2 % der Harnstoffmenge) auf lehmigem Sand, aufgekalkt auf pH 5,6, bei einer Grunddüngung für jedes Gefäß von

0,5 g N als Stickstoffmagnesia (20 + 7 + 0,2)

2,25 g $P_2O_5$ )
\+ 3,00 g $K_2O$ ) als Thomaskali 0/15/20

und Nachdüngung von 2,0 g $K_2O$ als KCL ) als Lösung einige Tage
und 0,5 g Mg als $MgSO_4 \cdot 7H_2O$ ) vor dem 3. Schnitt

| Urease-Hemmstoff in Mengen von 2 % | Trockensubstanz 1. - 5. Schnitt g/Gefäß | N-Aufnahme g/Gefäß | Rohprotein % in Trockensubstanz |
|---|---|---|---|
| keine | 111,0 | 2,30 | 13,0 |
| Subst. 1-Tab. 3 | 131,7 | 3,29 | 15,6 |
| Subst. 3-Tab. 3 | 128,6 | 3,15 | 15,3 |
| Subst. 4-Tab. 3 | 127,8 | 3,09 | 15,1 |
| Subst.31-Tab. 1 | 118,3 | 2,54 | 13,4 |
| Subst.48-Tab. 1 | 129,7 | 2,85 | 13,7 |
| Subst.66-Tab. 1 | 125,0 | 2,85 | 14,3 |
| Subst.68-Tab. 1 | 124,0 | 2,83 | 14,3 |

**Tabelle 7**

Gefäßversuche für Welsches Weidelgras (5 Erten vom 23.06. bis 27.11.) mit Harnstoff als Bodendünger, gegebenenfalls mit 2 % Urease-Hemmstoffen in Mengen von 0,5, 0,75 und 1,0 g N/Gefäß als Kopfdüngung nach jedem Schnitt auf lehmigen Sand, aufgekalkt auf pH 5,6, bei einer Grunddüngung für jedes Gefäß von

0,5 g N als Stickstoffmagnesia (20/7/0,2)

2,25 g $P_2O_5$ )
3,00 g $K_2O$ ) als Thomaskali 0/15/20

und Nachdüngung von 2,0 g $K_2O$ als KCl ) als Lösung einige Tage vor dem 3. Schnitt
und 0,5 g Mg als $MgSO_4 \cdot 7H_2O$ )

| Düngemittel | | Harnstoff | | | Harnstoff 1 - Tab. 3 | | | Harnstoff 64 - Tab. 1 | | | KAS | | |
|---|---|---|---|---|---|---|---|---|---|---|---|---|---|
| Zusatz | | —— | | | 2-Brom-2-nitro-propyl-N-carbamat | | | N-Methylmaleinimid | | | —— | | |
| N-Düngung g N/Gefäß | 0 | 0,5 | 0,75 | 1,0 | 0,5 | 0,75 | 1,0 | 0,5 | 0,75 | 1,0 | 0,5 | 0,75 | 1,0 |
| Trockensubstanz g/Gefäß | 11,1 | 65,1 | 73,4 | 73,7 | 70,9 | 79,7 | 86,4 | 68,9 | 81,7 | 81,9 | 83,3 | 92,7 | 99,9 |
| N-Aufnahme mg/Gefäß | 156 | 1114 | 1368 | 1571 | 1432 | 2095 | 2720 | 1285 | 1676 | 1944 | 1486 | 2386 | 3033 |
| Rohprotein % v.Tr.S. | 8,8 | 10,70 | 11,65 | 13,32 | 12,62 | 16,43 | 19,68 | 11,66 | 12,82 | 14,84 | 11,15 | 16,09 | 18,98 |

Zur Bodendüngung werden bevorzugt Harnstoff-Prills eingesetzt. Außerdem können auch NP-, NK-, N-Mg-Dünger oder Volldünger (NPK) mit entsprechenden Harnstoffgehalten verwendet werden. Auch Mikronährstoffe (= Spurenelemente), Fungizide, Insektizide, Halmverkürzer, Pflanzenhormone, Nitrifikationshemmer usw. können diesen harnstoffhaltigen Düngemitteln beigefügt werden.

Flüssige harnstoffhaltige Dünger, gegebenenfalls mit Ammoniumnitrat oder Natriumnitrat, lassen sich vorzugsweise mit Schleppschläuchen (EP 79 103 080) oder der Hängedüse (EP 0 015 325) mit nach unten gerichteter Düse auch vor der Saat (und gegebenenfalls auch in verschiedenen Wachstumsstadien) als Bodendünger auf den Acker bringen. Von den harnstoffhaltigen Düngemitteln kommen für diese Verwendung vor allem technisch reine Harnstoff-Lösungen (von 20 - 40 Gew.% N) oder Ammoniumnitrat-Harnstoff-Lösungen (=AHL), vorzugsweise mit 340 bis 360 g N/l, und gegebenenfalls mit Zusatz von geringen Mengen an Spurennährstoffen infrage. Allen diesen harnstoffhaltigen Düngemitteln ist die Brom-Nitro-Verbindung in Mengen von 0,05 bis 15 Gew.% vom Harnstoff-N zuzusetzen.

Wie die Versuche der Tabelle 6 und 7 gezeigt haben, kommen bei Einsatz von Harnstoff-Prills vorzugsweise Mengen von 2 % bezogen auf Harnstoff infrage.

Die für die Versuche dieser Tabellen eingesetzten erfindungsgemäßen Gemische wurden durch Puderung der Harnstoff-Prills mit den genannten Brom-Nitro-Verbindungen hergestellt, gegebenenfalls sind die Prills vor der Puderung mit einem Kohlenwasserstoff-Öl zur Verbesserung der Haftung zu bedüsen. Die in flüssigen harnstoffhaltigen löslichen Brom-Nitro-Verbindungen bereiten bei der Verteilung in gelösten harnstoffhaltigen Düngemitteln keine Schwierigkeiten. Bei den schwerer löslichen Brom-Nitro-Verbindungen mußte während der Verteilung gerührt werden. Gegebenenfalls kann man auch Lösungsvermittler zusetzen.

**Verwendung verschiedener harnstoffhaltiger Dünger als Blattdünger**

Im Gegensatz zur Düngung auf den Boden, der als Puffer für einen gleichmäßigen Nährstofffluß sorgt, erhält die Pflanze bei der Blattdüngung die Nährstoffe der jeweils aufgesprühten Lösung auf einmal. Dabei dringen die Nährstoffe unterschiedlich rasch in die Pflanze ein.

Die Nährstoff-Aufnahmegeschwindigkeit bei der Blattdüngung hängt nach den bisherigen Erkenntnissen u. a. vor allem von folgenden Faktoren ab:

a. im Bereich der Pflanze,

ihrer Morphologie und insbesondere von der Oberflächenstruktur der Blätter, z. B. ihrer Behaarung, Zahl der Spaltöffnungen/$cm^2$ (auf Ober- und Unterseite des Blattes)

Ausbildung von Wachsschichten,

Ableitungssystem zu )<br>
                      ) anderen Pflanzenteilen,<br>
Versorgungssystem von)

sowie vom

Zeitpunkt der Applikation innerhalb des Vegetationsverlaufes, von der Verteilung der pflanzlichen Urease auf der Oberfläche sowie von der spezifischen Verträglichkeit gegenüber Ammonium-Ionen

b. Witterungsparameter

Temperatur, relative Luftfeuchtigkeit, Sonnenscheinintensität, also den Witterungsbedingungen vor, während und nach der Applikation

c. Art der Düngerlösung

hinsichtlich Zusammensetzung, Konzentration, Feststoffgehalt, osmotischem Druck, Oberflächenspannung, Randwinkel der Tropfen Wasseraktivität.

d. Spritzgerät und Spritzmethode

Auftreffenergie der Tropfen, Tropfengrößenspektrum, Nettobelagsdichte.

Es sind also eine Fülle von Einflußgrößen vorhanden, die in komplexer Weise mit- und gegeneinander wirken. Ihr Einfluß kann hier nicht im Detail behandelt werden, sondern es ist nur möglich, einige wenige Beispiele herauszugreifen.

So hält z. B. die Behaarung auf den Blättern die aufgesprühten Tropfen zunächst fern von empfindlichen Stellen der Blattoberfläche. Regenfeuchtigkeit und Trockenheit beeinflussen die Wachsschicht, den Quellungszustand der Kutikula und den Wassergehalt der Pflanze und wirken dadurch auf die Pflanzenverträglichkeit von Harnstoff und/oder Ammoniumsalzen zurück.

Eine weitere bedeutsame Eigenschaft der Blattdünger-Lösungen ist ihre sogenannte Wasseraktivität (critical relative humidity CRH). Sie bezeichnet bei der jeweils vorliegenden Temperatur die relative Feuchtigkeit der Luft (in % der entsprechenden Sättigungsfeuchte), bei der bei einem betrachteten (feuchtigkeitsempfindlichen) Stoff Wasser weder verdunstet noch aufgenommen wird. Mit anderen Worten, bei einer höheren relativen Luftfeuchtigkeit wird Wasser aufgenommen, bei einer geringeren relativen

Feuchtigkeit dagegen Wasser abgegeben, d. h. es tritt eine Verdunstung von Wasser ein, so daß die Tropfen einer in Lösung befindlichen Substanz schrumpfen.

Während bei Düngemittelgranulaten ein niedriger CRH-Wert ein großer Nachteil für deren Lagerbeständigkeit ist, ist bei Düngemittel-Lösungen ein niedriger CRH-Wert gewöhnlich ein großer Vorteil für deren Verwendung als Blattdünger. Die Tropfen derartiger Blattdünger bleiben nämlich auf dem Wege von der Düse bis zur Zielfläche erhalten, bzw. sie vergrößern sich sogar. Bei höheren CRH-Werten würde nämlich bei niedrigerer Außenfeuchtigkeit ein Eintrocknen der Tropfen auftreten und gleichzeitig das mit der Blattdüngung ausgebrachte Pflanzenbehandlungsmittel freistzen.

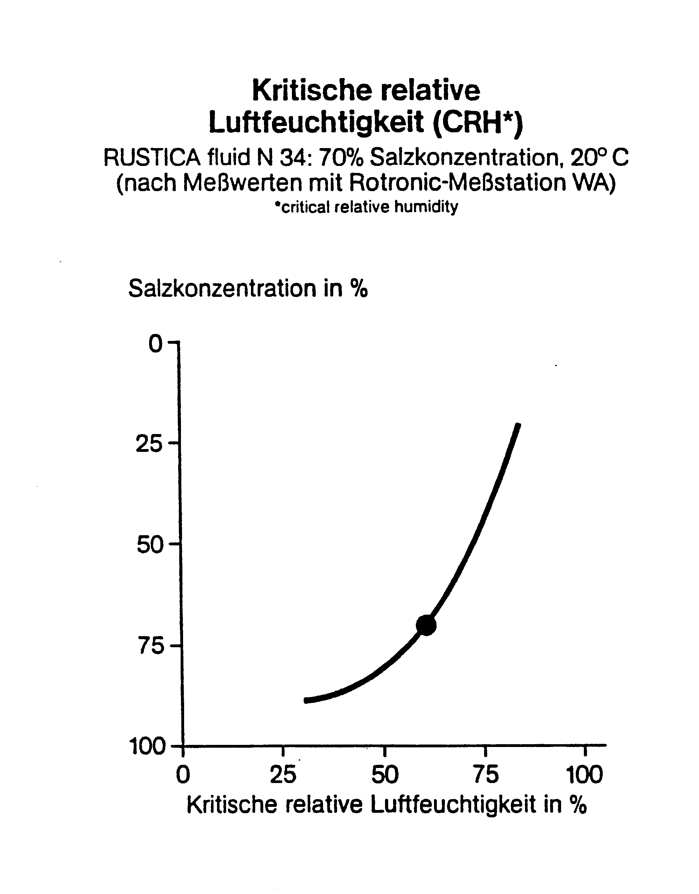

Für den Handelsdünger RUSTICA Fluid N 34, der ca. 13,6 Gew.% Ammoniumnitrat und ca. 13,4 Gew.% Harnstoff-N sowie geringe Mengen MgO und Spuren von Mn und Cu enthält, in erster Linie also als AHL anzusehen ist, wurde die in Figur 1 dargestellte kritische relative Luftfeuchtigkeit in Abhängigkeit von der Salzkonzentration ermittelt.

Auch für die Lagerung harnstoffhaltiger Düngerlösungen, insbesondere AHL in Behältern, die einen Gasaustausch mit der Atmosphäre zulassen, wodurch Wasser abgegeben oder aufgenommen werden kann, bestimmt der CRH-Wert während der Lagerperiode die Stabilität der Konzentration. Die Höhe des CRH-Wertes hängt u.a. z. B. bei AHL vom Verhältnis Harnstoff/Ammonnitrat ab. Gelangt Urease in das AHL-Lager kann ureolytische Harnstoffspaltung einsetzen und $NH_3$ freisetzen und damit Stickstoffverluste auslösen. Das Harnstoff/Ammonnitrat-Verhältnis verschiebt sich zu Ungunsten der Löslichkeit, wodurch Ammonnitratkristalle entstehen. Der erfindungsgemäße Zusatz vermeidet die Harnstoffhydrolyse.

Die Temperaturabhängigkeit dieser Kurve ist - insbesondere bei hoher Salzkonzentration - gering. Bei niedrigerer Salzkonzentration, z. B. 20 Gew.% beträgt der CRH-Wert für 30°C 83 % und für 10°C 86,5 %. Im beigefügten Diagramm ist die Streubreite bei verschiedenen Temperaturen vernachlässigt.

Üblicherweise wird diese Düngerlösung mit einer Salzkonzentration von 70 % entsprechend einem CRH-Wert von 65 % geliefert (im Diagramm gekennzeichnet durch den dicken Punkt). Während des Versprühens tritt gewöhnlich ein gewisser Wasserverlust auf, so daß sich die Salzkonzentration erhöht und gleichzeitig der CRH-Wert absinkt. Da die Luftfeuchtigkeit in Mitteleuropa vorzugsweise zwischen 50 und 60 % relativer Feuchtigkeit liegt, bleiben Tröpfchen von aufgesprühten AH-Lösungen daher während der Applikation gewöhnlich erhalten, bzw. wachsen sogar geringfügig an. Dieser Konzentrierungseffekt erniedrigt die CRH-Werte bis zu dieser Größenordnung auch dann, wenn die AHL vor dem Ausbringen mit Wasser verdünnt wurde.

Bei Lösungen von reinem Harnstoff oder reinem Ammoniumnitrat dagegen werden nicht so günstige, niedrige CRH-Werte erreicht, z. B. für 50 %ige Harnstoff-Lösung wie für 100 %ige Salze zwischen 10 und 30°C 75 - 76 % oder für 40 %ige Ammoniumnitrat-Lösung bei 10°C 76,5 %, 20°C 79,4 % und bei 30°C 76,7 %. Auch bei diesem Salz ist die Abhängigkeit von der Salzkonzentration - wie bei Harnstoff allein - gering. Bei diesen "reinen" Salzlösungen kommt es daher infolge von Salzausscheidung leichter zu Verätzungen als bei AHL.

Ammonnitrat-Harnstoff-Lösungen bleiben bis zu einer relativen Luftfeuchtigkeit von 40 % für eine gewisse Zeit während des Sprühens und auch noch danach auf der Pflanze als Tröpfchen erhalten. Dieses physikalische Phänomen eröffnet die Möglichkeit, AHL als Trägerstoff oder Zusatz zum Trägerstoff für Pflanzenschutzmaßnahmen insbesondere dann einzusetzen, wenn mit geringem Trägerstoffvolumen gearbeitet wird, wie das bei Rotationsdüsen der Fall ist. Weil mit Reduzierung des Trägerstoffvolumens die Mittelkonzentration ansteigt und der $H_2O$-Gehalt entsprechend zurückgeht, steigt das Verdünstungsrisiko beim klassischen Spritzen zusätzlich an. Trockenes und warmes Wetter verstärken es, insbesondere bei feintropfiger Applikation. Durch Verdunstung des Trägerstoffes kann das Pflanzenbehandlungsmittel als Aerosol freigesetzt werden. Es geht dann für seinen eigentlichen Bestimmungszweck verloren.

Das dem Rotationsdüsenverfahren entsprechende Trägerstoffvolumen wird, wie die pflanzenbaulichen Versuche zeigten, von den Pflanzen als inhibierte Ammonnitrat-Harnstoff-Lösung hervorragend vertragen.

Versuchsergebnisse mit Harnstoff in der Form von Harnstoff- bzw. Ammoniumnitrat-Harnstoff-Lösung entsprechend einem Gesamt-Gehalt von ca. 0,15 g N/Gefäß sind in Tabelle 8 zusammengestellt. (Bei den Versuchsreihen mit AHL und Harnstoff wurden gleiche Mengen N eingesetzt. Die Mengen des verwendeten Urease-Inhibitors wurden in beiden Versuchsreihen in derselben Weise gesteigert. Bezieht man jedoch die Hemmstoffmenge auf den Einsatz von Harnstoff-N, bedeutet das, daß im Falle von AHL die doppelte Menge zum Einsatz kommt.)

Bei den Versuchen von Tabelle 8 zeigt sich, daß bei Losungen mit ausschließlich Harnstoff erst bei Urease-Hemmstoff-Mengen von 4 % des Harnstoff-N optimale Ernten bzw. N-Aufnahmen bzw. Rohproteingehalte erreicht werden. Eine Erhöhung der Menge des Urease-Hemmstoffes von 2 auf 4 % der Harnstoff-N-Gabe bringt bei reiner Harnstoff-Lösung eine Erhöhung der Erträge.

Bei AHL ist das Optimum ebenfalls bei 4 % Inhibitor, bezogen auf Harnstoff-N, erreicht. Eine weitere Erhöhung bringt keine Vorteile mehr.

**Tabelle 8**

Gefäßversuche üit Sommerweizen, Sorte "Schirokko", mit Harnstoff als Blattdünger im EC-Stadium 39 - 49, 51 - 55 und 59 - 61* in Mengen von je 0,05 g N/Gefäß bei Harnstoff-Lösungen (ca. 25 Gew.%) bzw. 32 - 37, 39 -

49 und 51 - 59* in Mengen von je 0,05 g N/Gefäß bei AHL (ca. 70 Gew.% Salz) und Bodennachdüngung mit KAS zum EC-Stadium 51 - 59* in Mengen von 0,30 g N/Gefäß in allen Fällen und mit und ohne Zusatz von 2-Brom-2-nitropropyl-N-carbamat als Urease-Inhibitor.

| Lfd. Nr. | Düngerform (Menge s.o.) | Inhibitor Menge/100 g Harnstoff-N | Trockensubst. g/Gefäß | N-Aufnahme mg/Gefäß | Rohprotein % |
|---|---|---|---|---|---|
| 1 | AHL | 0 | 63,77 | 1039 | 10,[illegible] |
| 2 | AHL | 4 | 68,68 | 1058 | 9,63 |
| 3 | AHL | 8 | 68,69 | 1051 | 9,56 |
| 4 | Harnstoff | 0 | 64,16 | 962 | 9,38 |
| 5 | Harnstoff | 2 | 65,11 | 951 | 9,13 |
| 6 | Harnstoff | 4 | 68,36 | 1046 | 9,56 |

* nach Zadok, Chang und Konzak, EUCARPIA-Bulletin Nr, 7. 1974 (EUCARPIA: Europäische Gesellschaft für Pflanzenzüchtung)

Die Ertragserhöhung mit Urease-Hemmstoff-Mengen von optimal 4 % des Harnstoff-N läßt sich mit der Stickstoffwirkung allein nicht erklären. Als mögliche Ursache darf die Aktivierung des Phytohormonsystems angesehen werden, für das keine direkte Abhängigkeit von der N-Menge vorliegen dürfte.

Auf kausale Beziehungen zwischen der Stickstoffernährung und der Hormonversorgung, insbesondere mit Cytokinin, haben bereits MICHAEL et al. (Zeitschrift "Pflanzenernähr. und Bodenk. 125 (1970) 24 ff) und H. HERZOG (Zeitschrift Pflanzenernähr. und Bodenk. 144 (1981) 16 ff und 241 ff) und andere hingewiesen. Unterschiedliche Ergebnisse erklärt HERZOG mit sortenspezifischen Eigenschaften, insbesondere hinsichtlich der Umwandlungszeit und -intensität in der Pflanze.

Urease-Hemmstoffe sind in diesen Arbeiten nicht berücksichtigt worden. Es darf jedoch angenommen werden, daß der durch Brom-Nitro-Verbindungen temporär konservierte Harnstoff bei der Blatt-Applikation zunächst nicht in den Stoffwechsel mit einbezogen wird. Es ist vorstellbar, daß sich dadurch gemeinsam mit den Pflanzenhormonen Systeme bilden, welche schädliche Reaktionsstöße vermeiden, so daß ein Regelsystem entsteht, das sowohl die zumutbare Nachlieferung von assimilierbarem Stickstoff als auch die optimale Aufnahme von Stickstoff selbst durch die Pflanze gewährleistet.

Bezüglich der Mischverträglichkeit mit anderen Pflanzenbehandlungsmitteln konnte festgestellt werden, daß diese mit anderen Blattdüngern des Handels vergleichbar ist, daß die Brom-Nitro-Verbindungen jedoch besser pflanzenverträglich sind und höhere Erträge liefern.

Der Mengeneinsatz ist bei der Blattdüngung in der gleichen Weise wie bei der Bodendüngung vorzusehen. Als Vorteile der vorliegenden erfindungsgemäßen harnstoffhaltigen Flussigdünger mit Zusätzen von Brom-Nitro-Verbindungen können daher bei Blattdüngung festgestellt werden:

a. Sie gestatten es, zur Blattdüngung sinnvolle Mengen ohne Schädigung der Pflanzen einzusetzen (s. Seite 2).

b. Sie steigern den pflanzenbaulichen Ertrag und

c. stellen als Trägerstoff für Pflanzenbehandlungsmittel eine Spritzflüssigkeit dar, die unter unseren klimatischen Bedingungen auch bei trockenem Wetter auf dem Wege von der Düse bis zur Zielfläche nicht verdunstet und auch noch auf dem Blatt längere Zeit verweilt.

d. Sie erlauben daher ein feintropfiges und vielen Pflanzenschutzmaßnahmen angepaßtes Ausbringen der Spritzflüssigkeit.

e. Sie gestatten das Zumischen anderer Pflanzenbehandlungsmittel.

f. Schäden an Pflanzen entstehen beim Einsatz als Trägerstoff in Verbindung mit Rotationsdüsen bei dem dort üblichen Aufwand je Einzelbehandlung von 20 - 50 l/ha nicht.

g. Infolge der verzögerten Freigabe des für die Pflanzen aufnehmbaren Stickstoffs treten keine Verluste des als Düngemittel eingesetzten Harnstoff-Stickstoffes auf.

h. Sie regen in der Pflanze das Phytohormonsystem andauernd, intensiv und trotzdem pflanzenverträglich an.

Ein weiterer Gegenstand der Anmeldung ist die Verwendung der Düngermischung aus harnstoffhaltigem Dünger und Brom-Nitro-Verbindungen in fester Form.

Soweit die Gemische in ggf. konditionierter granulierter Form vorliegen, kommt ihr Einsatz vor und u. U. auch noch während der Wachstumsperiode der Kulturpflanzen in Frage.

Dazu sind die üblichen Düngerstreuer verwendbar. Natürlich ist auch eine Verteilung von Hand möglich.

Die in (vorwiegend wässriger) Lösung eingesetzten, erfindungsgemäßen Gemische können sowohl zur Boden- wie auch zur Blattdüngung eingesetzt werden. Das ist sowohl vom Zeitpunkt der Düngerausbringung während der Vegetationsperiode, als auch vom eingesetzten Feldspritzgerät bzw. der verwendeten

Spritzmethode abhängig.

Der Vorteil der Verteilungsverfahren bei Flüssigkeiten besteht darin, daß man dabei besonders bequem zusätzliche Pflanzenpflege-Maßnahmen verbinden kann, z. B. eine zusätzliche Versorgung mit Spurennährstoffen, falls entsprechende Mangelkrankheiten beobachtet wurden, oder die Bekämpfung von anderen festgestellten Krankheiten oder von Schädlingen und/oder Unkräutern mit den entsprechenden Mikronährstoffen, Nematiziden, Fungiziden, Bakteriziden, Insektiziden, Akariziden, Mitiziden und/oder den verschiedensten Spezial-Herbiziden.

Für den Transport kommen die Düngemittel möglichst hochprozentig zum Versand. Zur Verteilung auf den Acker dagegen ist es günstiger, wenn man von möglichst verdünnten Lösungen ausgeht. Die von der Industrie oder dem Zwischenhandel verkauften Dünger-Lösungen werden daher vor dem Ausbringen auf den Acker häufig mit Wasser im Verhältnis 1 : 1, 1 : 2, 1 : 3 oder auch 1 : 10 und mehr verdünnt.

Für die Industrie, bei der zunächst harnstoffhaltige wässrige Lösungen anfallen, die unter Energieaufwand zu Harnstoff-Schmelzen mit 1 % $H_2O$ und weniger eingedampft werden müssen, bedeutet das außerdem, daß man für Harnstoff-Lösungen beim Eindampfen bei Harnstoffgehalten von 70 oder 75 % aufhören kann.

**Patentansprüche**

1. Harnstoffhaltige Dünger mit Urease-Inhibitoren dadurch gekennzeichnet, daß als derartige Inhibitoren Brom-Nitro-Verbindungen und zwar der Formel

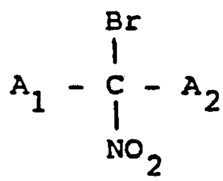

enthalten sind, und

$$A_1 = (CH_2)_{n_1} X_1$$

$$A_2 = (CH_2)_{n_2} X_2$$

bedeuten, wobei sowohl $n_1$ und $n_2$ als auch $X_1$ und $X_2$ gleich oder verschieden und die Alkylgruppen von $A_1$ und $A_2$ gerad- oder verzweigtkettig und die Substituenten $X_1$ und $X_2$ an jedem beliebigen C angeordnet sein können, bevorzugt allerdings in α - oder ω -Stellung zum Brom-Nitro-Kohlenstoffatom, und wobei

$n_1$ und $n_2$ die Werte 0 bis 6 annehmen können und

$X_1$ und $X_2$ jeweils H oder YR bedeuten mit

Y = O, S oder NH und

R = H oder ein gerad- oder verzweigtkettiges $C_1$-bis $C_6$-Alkyl oder eine bis zu 3 Methylgruppen enthaltende Cyclopent(en)yl-, Cyclohex(en)yl- oder Phenyl-Gruppe

oder 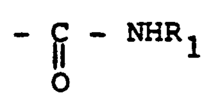 und

$R_1$ = eine der für R angeführten Substituenten (ausschließlich des zuletzt genannten) sein kann.

2. Harnstoffhaltige Dünger nach Anspruch 1, dadurch gekennzeichnet, daß die Brom-Nitro-Verbindung

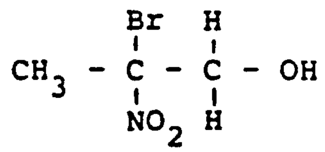 ist.

3. Harnstoffhaltige Dünger nach Anspruch 1, dadurch gekennzeichnet, daß die Brom-Nitro-Verbindung

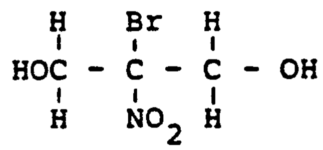 ist.

4. Harnstoffhaltige Dünger nach Anspruch 1, dadurch gekennzeichnet, daß die Brom-Nitro-Verbindung

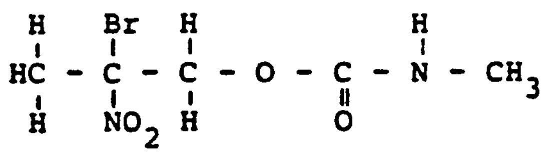 ist.

5. Harnstoffhaltige Dünger nach Anspruch 1, dadurch gekennzeichnet, daß die Brom-Nitro-Verbindung

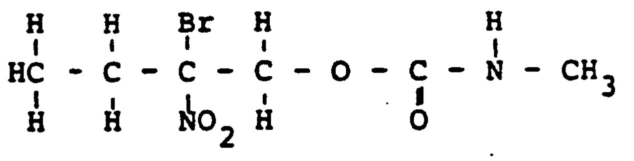 ist.

6. Harnstoffhaltige Dünger nach Anspruch 1 und einem oder mehreren der Ansprüche 2 bis 5, dadurch gekennzeichnet, daß je 100 Gew.-Teile bezogen auf die Menge im Harnstoff verliegenden Stickstoffs (Harnstoff-N) 0,05 bis 15 Gew -Teile bevorzugt 0,4 bis 4 Gew.-Teile, einer Brom-Nitro-Verbindung enthalten sind.

7. Harnstoffhaltige Dünger nach einem oder mehreren der Ansprüche 1 bis 6, in der Form von Harnstoff-Prills bzw. -Granulaten in der üblichen Konfektionierung.

8. Harnstoffhaltiger Dünger nach einem oder mehreren der Ansprüche 1 bis 6, in der Form von an sich bekanntem harnstoffhaltigen NP-,NK-, N-Mg-Dünger oder Volldünger in der üblichen Konfektionierung.

9. Harnstoffhaltiger Dünger nach einem oder mehreren der Ansprüche 1 bis 8, dadurch gekennzeichnet, daß außerdem Mikronährstoffe und/oder Pflanzenbehandlungsmittel - wie Herbizide, Fungizide, Insektizide, Halmverkürzer, Pflanzenhormone, Nitrifikationshemmer - enthalten sind.

10. Harnstoffhaltige Dünger nach einem oder mehreren der Ansprüche 1 bis 6, in der Form von harnstoffhaltigen Lösungen - vorzugeweise wäßrigen Lösungen.

11. Harnstoffhaltige Dünger nach einem oder mehreren der Ansprüche 1 bis 6 und 10, dadurch gekennzeichnet, daß die harnstoffhaltigen Lösungen im wesentlichen aus Harnstoff mit Gehalten von 5 bis 40 Gew.% N bestehen.

12. Harnstoffhaltige Dünger nach einem oder mehreren der Ansprüche 1 bis 6 und 10 und/oder 11, dadurch gekennzeichnet, daß die harnstoffhaltigen Lösungen wässrige Harnstoff-Lösungen sind, die in verschiedenen Eindampfstufen der Harnstoffsynthese anfallen.

13. Harnstoffhaltige Dünger nach einem oder mehreren der Ansprüche 1 bis 6 und 10, dadurch gekennzeichnet, daß die harnstoffhaltigen Lösungen Ammoniumnitrat-Harnstoff-Lösungen (AHL) mit N-Gehalten von 1 bis 32 Gew.%, vorzugsweise von ca. 28 Gew.% N, sind.

14. Harnstoffhaltige Dünger nach einem oder mehreren der Ansprüche 1 bis 6 und 10 bis 13, dadurch gekennzeichnet, daß diese Lösungen außerdem noch lösliche Phosphate, und/oder Kalisalze und/oder Magnesiumsalze enthalten.

15. Harnstoffhaltige Dünger nach einem oder mehreren der Ansprüche 1 bis 6 und 10 bis 14, dadurch gekennzeichnet, daß diese Lösungen außerdem Mikronährstoffe und/oder Pflanzenbehandlungsmittel - wie Herbizide, Fungizide, Insektizide, Halmverkürzer, Pflanzenhormone - und/oder Lösungsstabilisatoren enthalten.

16. Verwendung von harnstoffhaltigem Dünger nach einem oder mehreren der Ansprüche 1 bis 15, als

Bodendünger

17. Verwendung von harnstoffhaltigem Dünger nach einem oder mehreren der Ansprüche 1 bis 6 und 10 bis 15, als Blattdünger

18. Verwendung von harnstoffhaltiger nach Anspruch in zwei oder mehreren Einzelgaben

19. Verwendung der harnstoffhaltigen Dünger nach Anspruch 1 bis 5 und 7 bis 15 unter Zusatz von Brom-Nitro-Verbindungen in Mengen von 0,05 bis 15 Gew.-Teilen, vorzugsweise von 0,4 bis 4 Gew.-Teilen, je 100 Gew.-Teile Harnstoff-N mit Hilfe geeigneter Düngerstreuer und/oder Feldspritzgeräte zur Bodendüngung.

20. Verwendung von harnstoffhaltigen Düngern nach Anspruch 1 bis 5 und 10 bis 15 in Mengen von 0,05 bis 15 Gew.-Teilen, vorzugsweise von 0,4 bis 4 Gew.-Teilen, je 100 Gew.-Teilen Harnstoff-N mit Hilfe von jeweils geeigneten Feldspritzgeräten zur Blattdüngung.

## Claims

1. Urea-containing fertilizers having urease inhibitors, characterized in that they contain, as inhibitors of this type, bromo-nitro compounds of the formula

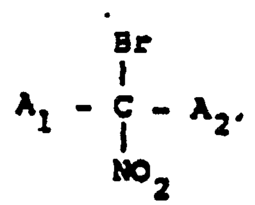

and

$A_1$ denotes $(CH_2)_{n1}X_1$ and

$A_2$ denotes $(CH2)_{n2}X_2$, whereih both $n_1$ and $n_2$ as well as $X_1$ and $X_2$ can be identical or different and the alkyl groups of $A_1$ and $A_2$ can be straight-chain or branched and the substituents $X_1$ and $X_2$ can be arranged on any desired C, but are preferably in the $\alpha$- or $\omega$-position with respect to the bromo-nitro carbon atom, and wherein

$n_1$ and $n_2$ can assume the values 0 to 6 and

$X_1$ and $X_2$ each denote H or YR where

Y can be O, S or NH and

R can be H or a straight-chain or branched $C_1$-$C_6$-alkyl or a cyclopent(en)yl, cyclohex(en)yl or phenyl group containing up to 3 methyl groups, or can be

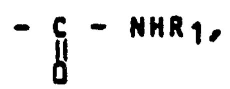

and

$R_1$ can be one of the substituents mentioned for

R (excluding the last-mentioned one).

2. Urea-containing fertilizers according to Claim 1, characterized in that the bromo-nitro compound is

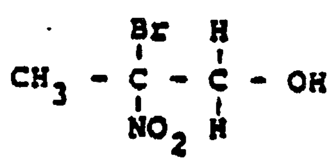

3. Urea-containing fertilizers according to Claim 1, characterized in that the bromo-nitro compound is

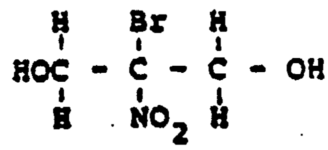

4. Urea-containing fertilizers according to Claim 1, characterized in that the bromo-nitro compound is

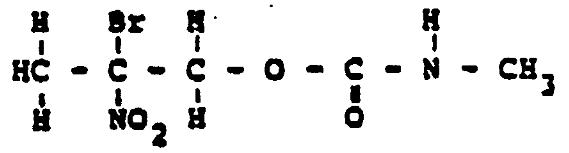

5. Urea-containing fertilizers according to Claim 1, characterised in that the bromo-nitro compound is

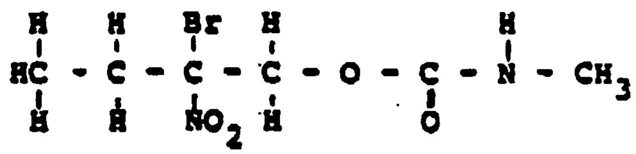

6. Urea-containing fertilizers according to Claim 1 and one or more of Claims 2 to 5, characterized in that 0.05 to 15 parts by weight, preferably 0.4 to 4 parts by weight, of a bromo-nitro compound are present per 100 parts by weight, based on the amount of nitrogen present in the urea.

7. Urea-containing fertilizers according to one or more of Claims 1 to 6, in the form of urea prills or granules in the customary formulation.

8. Urea-contaihing fertilizer according to one or more of Claims 1 to 6, in the form of complete fertilizers or NP, NK, N-Mg fertilizers which contain urea and are known per se, in the customary formulation.

9. Urea-containing fertilizer according to one or more of Claims 1 to 8, characterized in that micronutrients and/or plant treatment agents - such as herbicides, fungicides, insecticides, stem shorteners, plant hormones or nitrification inhibitors - are also present.

10, Urea-containing fertilizers according to one or more of Claims 1 to 6, in the form of urea-containing solutions - preferably aqueous solutions.

11. Urea-containing fertilizers according to one or more of Claims 1 to 6 and 10, characterized in that the urea-containing solutions essentially consist of urea and contain 5 to 40% by weight of N.

12. Urea-containing fertilizers according to one or more of Claims 1 to 6 and 10 and/or 11, characterized in that the urea-containing solutions are aqueous urea solutions which are obtained at various stages of concentration in the synthesis of urea.

13. Urea-containing fertilizers according to one or more of Claims 1 to 6 and 10, characterized in that the urea-containing solutions are ammonium nitrate/urea solutions (AUS) having N contents of 1 to 32% by weight, preferably about 28% by weight, of N.

14. Urea-containing fertilizers according to one or more of Claims 1 to 6 and 10 to 13, characterized in that these solutions furthermore contain soluble phosphates and/or potassium salts and/or magnesium salts.

15. Urea-containing fertilizers according to one or more of Claims 1 to 6 and 10 to 14, characterized in that these solutions furthermore contain micronutrients and/or plant treatment agents - such as herbicides, fungicides, insecticides, stem shorteners or plant hormones - and/or solution stabilizers.

16. Use of urea-containing fertilizer according to one or more of Claims 1 to 15, as a soil fertilizer.

17. Use of urea-containing fertilizer according to one or more of Claims 1 to 6 and 10 to 15, as a top dressing.

18. Use of urea-containing fertilizers according to Claim 16 or 17 in two or more individual applications.

19. Use of the urea-containing fertilizers according to Claim 1 to 5 and 7 to 15, with the addition of bromo-nitro compounds in amounts of 0.05 to 15 parts by-weight, preferably 0.4 to 4 parts by weight, per 100 parts by weight of urea N, with the aid of suitable fertilizer distributors and/or field sprayers for soil fertilization.

20. Use of urea-containing fertilizers according to Claim 1 to 5 and 10 to 15 in amounts of 0.05 to 15 parts by weight, preferably 0.4 to 4 parts by weight, per 100 parts by weight of urea N, with the aid of suitable field sprayers for application of a top dressing.

**Revendications**

1) Engrais chimique contenant de l'urée ainsi que des inhibiteurs d'uréase, caractérisé en ce qu'il contient comme inhibiteurs de ce genre des composés brome-nitro répondant en particulier à la formule

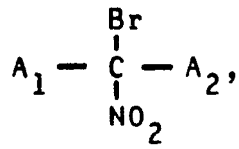

et où l'on a

$A_1 = (CH_2)_{n_1} X_1$ et

$A_2 = (CH_2)_{n_2} X_2$

où $n_1$ et $n_2$ de même que $X_1$ et $X_2$ sont semblables ou differents et ou les groupes alcoyl de $A_1$ et de $A_2$, à chaines droite ou ramifiée, et les substituants $X_1$ et $X_2$ peuvent être disposés sur un C quelconque de préférence toutefois sur les positions α- ou ω- par rapport à l'atome de carbone du brome-nitro, et en étant précisé que $n_1$ et $n_2$ peuvent prendre chaque fois les valeurs 0 à 6, et $X_1$ et $X_2$ peuvent représenter chaque fois H ou YR avec Y = O, S ou NH, et R = H, ou un alcoyl en $C_1$ à $C_6$ à chaine droite ou ramifiée, ou un groupe cyclopent-(ène)yl-, cyclohex(ène)yl, ou phényl, contenant jusqu'à 3 groupes méthyl

ou 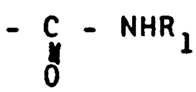

et $R_1$ peut être un des substituants indiqués pour R (exclusivement de celui qui est mentionné en dernier).

2) Engrais contenant de l'urée suivant la revendication 1, caractérisé en ce que le composé brome-nitro est le

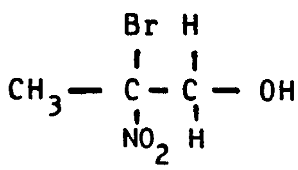

3) Engrais contenant de l'urée suivant la revendication 1, caractérisé en ce que le composé brome-nitro est le

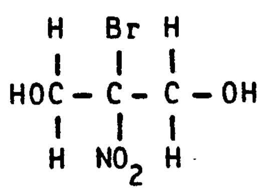

4) Engrais contenant de l'urée suivant la revendication 1, caractérisé en ce que le composé brome-nitro est le

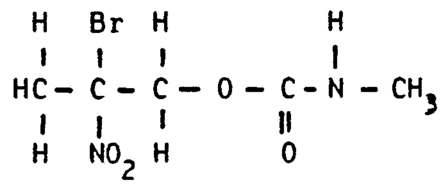

5) Engrais contenant de l'uree suivant la revendication 1, caractérisé en ce que le composé brome-nitro est le

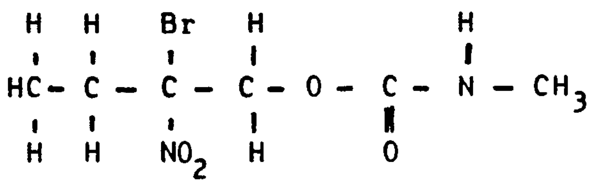

6) Engrais contenant de l'urée suivant la revendication 1 et une ou plusieurs des revendications 2 à 5, caractérisé en ce qu'il contient, pour 100 parties en poids, calculé sur la quantité d'azote qui se trouve dans l'urée (urée-N), 0,05 à 15 parties en poids, de préférence 0,4 à 4 parties en poids, d'un composé brome-nitro.

7) Engrais contenant de l'urée suivant une ou plusieurs des revendications 1 à 6, caractérisé en ce que cet engrais est mis en oeuvre sous la forme de "prills" d'urée ou de granulés conditionnés dela façon courante.

8) Enqrais contenant de l'urée suivant l'une quelconque des revendications 1 à 6, caractérisé en ce qu'il est appliqué sous la forme d'un engrais contenant de l'urée connu, engrais NP, NK, NMg ou engrais complet, avec le conditionnement habituel.

9) Engrais contenant de l'urée suivant l'une des revendications 1 à 8, caractérisé en ce qu'il contient en outre des substances nutritives micronisées et/ou des agents pour le traitement des plantes, tels que des herbicides, fongicides, insecticides, raccourcisseurs du chaume, des hormones végétales, des inhibiteurs de nitrification.

10) Engrais contenant de l'urée suivant l'une quelconque des revendications 1 à 6, caractérisé en ce qu'il est appliqué sous la forme de solutions d'urée, de préférence, de solutions aqueuses.

11) Engrais contenant de l'urée suivant l'une quelconque des revendications 1 à 6 et 10, caractérisé en ce que les solutions contenant de l'urée sont constituées essentiellement d'urée avec des teneurs de 5 à 40 % en poids de N.

12) Engrais contenant de l'urée suivant l'une quelconque des revendications 1 à 6 et 10 et/ou 11, caractérisé en ce que les solutions contenant de l'urée sont des solutions aqueuses contenant de l'urée que l'on obtient à différentes étapes d'évaporation de la synthèse de l'urée.

13) Engrais contenant de l'urée suivant l'une quelconque des revendications 1 à 6 et 10, caractérisé en ce que les solutions contenant de l'urée sont des solutions de nitrate d'ammonium et d'urée contenant de l'urée (AHL) ayant des teneurs en N de 1 à 32 % en poids, ou mieux d'environ 28 % en poids de N.

14) Engrais contenant de l'urée suivant l'une quelconque des revendications 1 à 6 et 10 à 13, caractérisé en ce que ces solutions contiennent de plus, des phosphates et/ou des sels de potassium, et/ou des sels de magnésium solubles.

15) Engrais contenant de l'urée suivant l'une quelconque des revendications 1 à 6 et 10 à 14, caractérisé en ce que ces solutions contiennent en outre des substances micronisées et/ou des agents de traitement des plantes, tels que des herbicides, fongicides, insecticides, raccourcisseur de chaume, hormones végétales, et/ou stabilisants des solutions.

16) Utilisation del'engrais contenant de l'urée suivant une ou plusieurs des revendications 1 à 15, comme engrais de fond.

17) Utilisation de l'engrais contenant de l'urée suivant l'une ou plusieurs des revendications 1 à 6 et 10 à 15 comme engrais foliaire.

18) Utilisation de l'engrais contenant de l'urée suivant les revendications 16 ou 17, caractérisée en ce que l'application se fait en deux ou plusieurs doses séparées.

19) Utilisation del'engrais contenant de l'urée suivant les revendications 1 à 5 et 7 à 15, avec addition de composés brome-nitro dans des proportions de 0,05 à 15 parties en poids, ou mieux 0,4 à 4 parties en poids pour 100 parties d'urée-N, à l'aide d'un distributeur d'engrais approprié, et/ou d'un appareil de pulvérisation agricole pour la fumure de fond.

20) Utilisation de l'engrais contenant de l'urée suivant les revendications 1 à 5 et 10 à 15, dans des proportions de 0,05 à 15 parties en poids, ou mieux de 0,4 à 4 parties en poids pour 100 parties d'urée-N, à l'aide d'appareils de pulvérisation agricole appropriés pour la fumure foliaire.

# Kritische relative Luftfeuchtigkeit (CRH*)

RUSTICA fluid N 34: 70% Salzkonzentration, 20° C
(nach Meßwerten mit Rotronic-Meßstation WA)
*critical relative humidity